# EUROPEAN PATENT APPLICATION

(11) **EP 4 819 227 A1**
(43) Date of publication of application: **07.10.2026**
(21) Application number: 24896649.1
(22) Date of filing: 28.11.2024
(51) Int. Cl.: H01M 4/36, H01M 10/0525, C01B 25/45

(54) **LITHIUM IRON PHOSPHATE POSITIVE ELECTRODE MATERIAL, PREPARATION METHOD THEREFOR AND USE THEREOF**

(30) Priority: 28.11.2023 CN 202311615121
(71) Applicant: SVOLT Energy Technology Co., Ltd., Changzhou, Jiangsu 213200 (CN)
(72) Inventor: PAN, Hailong, Hangzhou, Jiangsu 213200 (CN); MA, Yanmei, Hangzhou, Jiangsu 213200 (CN); CUI, Junyan, Hangzhou, Jiangsu 213200 (CN); LI, Zitan, Hangzhou, Jiangsu 213200 (CN); WANG, Tao, Hangzhou, Jiangsu 213200 (CN); YANG, Hongxin, Hangzhou, Jiangsu 213200 (CN)
(74) Representative: Michalski Hüttermann & Partner mbB
(86) International application number: PCT/CN2024/135276
(87) International publication number: WO 2025/113564

(57) **Abstract**

A lithium iron phosphate positive electrode material, a preparation method therefor and a use thereof. A value K of the lithium iron phosphate positive electrode material is less than or equal to 1, and K is calculated by means of the grain size and the b-axis length of the lithium iron phosphate positive electrode material. The electrode material has excellent properties, including low resistivity, high conductivity, high compaction density and high capacity. The inventors found that when the value K of the electrode material is less than or equal to 1, the excellent properties such as high conductivity, low resistivity, high compaction density and high capacity can be ensured. The powder resistivity of the electrode material is smaller than 10Ω·cm, the compaction density is greater than 2.2 g/cm³, the 0.1 C discharge capacity is greater than 160mAh/g, the 1C discharge capacity is greater than 150mAh/g.

## Description

### CROSS-REFERENCE TO THE RELATED APPLICATION

The present application claims priority to Chinese Patent Application No. 202311615121.2 filed with the China National Intellectual Property Administration on November 28, 2023, and entitled "LITHIUM IRON PHOSPHATE POSITIVE ELECTRODE MATERIAL, PREPARATION METHOD THEREFOR AND USE THEREOF", all the contents of which are incorporated herein by reference in entirety.

### TECHNICAL FIELD

The present application belongs to the technical field of electrode material preparation, and specifically relates to a lithium iron phosphate positive electrode material, a preparation method therefor, and a use thereof.

### BACKGROUND

Lithium iron phosphate (LiFePO₄), by virtue of its advantages such as low cost, stable charge-discharge plateau, environmental friendliness, and high safety, has become one of the most widely used positive electrode materials for lithium-ion batteries. At present, the domestic shipment volume of lithium iron phosphate has exceeded that of ternary positive electrode materials. However, the electrical conductivity of the material has long been a problem urgently to be solved in the industry, and the electrical conductivity of the material directly affects the electrical performance of batteries made therefrom.

### SUMMARY

Therefore, the technical problem to be solved by the present application is to overcome the defects in the prior art, such as poor electrical conductivity of lithium iron phosphate positive electrode materials, and thereby to provide a lithium iron phosphate positive electrode material, a preparation method therefor, and a use thereof.

To this end, the present application provides the following technical solutions.

In a first aspect, the present application provides a lithium iron phosphate positive electrode material, where the lithium iron phosphate positive electrode material has K ≤ 1, and K satisfies equation 1:
$K = D + \left(b-6\right) \times 100$ equation 1
where D is a grain size of the lithium iron phosphate positive electrode material, with 0.05 µm ≤ D ≤ 0.15 µm; and
b is a b-axis length of the lithium iron phosphate positive electrode material, with b ≤ 6.0095 Å.

In a second aspect, the present application provides a preparation method for a lithium iron phosphate positive electrode material, where the preparation method includes the following steps:
(1) mixing iron phosphate, a lithium source, a dopant, a carbon source, and a flux, followed by grinding, to obtain a slurry;
   where the iron phosphate has an iron-to-phosphorus ratio of 0.975-0.99 and a specific surface area of 6-10 m²/g; the slurry has a particle size D50 of 300-500 nm; doping elements in the dopant include at least two of vanadium, titanium, tungsten, and magnesium; a mass content of the doping elements in the lithium iron phosphate positive electrode material is 1000-5000 ppm; and the flux is at least one of lithium fluoride, lithium phosphate, and lithium dihydrogen phosphate; and
(2) drying and sintering the slurry to obtain the lithium iron phosphate positive electrode material with K ≤ 1;
   where $K = D + \left(b-6\right) \times 100$ equation 1
   where D is a grain size of the lithium iron phosphate positive electrode material, with 0.05 µm ≤ D ≤ 0.15 µm; and
   b is a b-axis length of the lithium iron phosphate positive electrode material, with b ≤ 6.0095 Å.

When the grain size D and the b-axis length of the lithium iron phosphate positive electrode material are measured by XRD, the refinement shall be ensured to have an R_{wp} ≤ 10%, where R_{wp} is the weighted profile residual factor, which can ensure the refinement accuracy.

A molar ratio of the iron phosphate to lithium in the flux is 1:(0.02-0.06).

The dopant includes at least two of vanadium pentoxide, titanium dioxide, tungsten trioxide, and magnesium oxide.

When the dopant includes at least two of vanadium pentoxide, titanium dioxide, tungsten trioxide, and magnesium oxide, the mass ratio of different dopants is not specifically limited. When the dopant includes two of vanadium pentoxide, titanium dioxide, tungsten trioxide, and magnesium oxide, the mass ratio may be, but is not limited to, 1:1, 1:2, 1:3, 2:1, 2:5, etc.. When the dopant includes three of vanadium pentoxide, titanium dioxide, tungsten trioxide, and magnesium oxide, the mass ratio may be, but is not limited to, 3:2:1, 4:3:1, 1:1:1, 2:1:1, 2:5:3, 5:10:7, etc.. When the dopant includes all four of vanadium pentoxide, titanium dioxide, tungsten trioxide, and magnesium oxide, the mass ratio may be, but is not limited to, 4:3:2:1, 7:7:6:4, 1:3:1:1, 1:1:1:1, 2:5:7:10, 5:10:15:6, or any other numerical values.

A mass content of carbon element in the lithium iron phosphate positive electrode material is 1.3-1.5 wt%.

Optionally, the carbon source is at least one of polyethylene glycol, glucose, carbon nanotubes, sucrose, and starch.

When two or more carbon sources are included, the mass ratio of different carbon sources is not specifically limited. When two carbon sources are included, the mass ratio of the two carbon sources may be, but is not limited to, 2:1, 3:2, 1:1, 2:7, 8:3, etc.. When three carbon sources are included, the mass ratio of the three carbon sources may be, but is not limited to, 2:1:1, 3:2:7, 1:1:1, 2:7:6, 8:3:5, etc.. When four carbon sources are included, the mass ratio of the four carbon sources may be, but is not limited to, 2:1:1:6, 3:2:7:1, 1:1:1:9, 2:7:6:6, 8:3:5:2, etc.. When five carbon sources are included, the mass ratio of the five carbon sources may be, but is not limited to, 2:1:1:6:7, 3:2:7:1:4, 1:1:1:9:1, 2:7:6:6:6, 8:3:5:2:1, etc.

The preparation method satisfies at least one of (1)-(3):
(1) the lithium source is lithium carbonate and/or lithium hydroxide monohydrate;
(2) a molar ratio of the iron phosphate to lithium in the lithium source is 1:(0.97-1.02); and
(3) a mass content of water in the slurry is 50-70%.

The drying is spray drying;
optionally, parameters of the spray drying are as follows: a feed frequency of 10-30 Hz and an atomizer frequency of 40-60 Hz;
optionally, an inlet air temperature is 240-270 °C; and
optionally, an outlet air temperature is 80-100 °C.

The sintering includes the following specific steps: heating to a temperature of 750-820 °C at a heating rate of 1.5-4 °C/min, and then holding at that temperature for 8-12 h.

In a third aspect, the present application provides an electrode sheet including a current collector and a coating layer attached to the current collector, where a raw material of the coating layer includes the above lithium iron phosphate positive electrode material or the lithium iron phosphate positive electrode material prepared by the above preparation method.

In a fourth aspect, the present application provides a battery including the above lithium iron phosphate positive electrode material, the lithium iron phosphate positive electrode material prepared by the above preparation method, or the above electrode sheet.

The technical solutions of the present application have the following advantages.
1. For the lithium iron phosphate positive electrode material provided by the present application, the K value of the lithium iron phosphate positive electrode material is ≤ 1, where K is calculated from the grain size and the b-axis length of the lithium iron phosphate positive electrode material. This positive electrode material exhibits excellent properties such as low resistivity, high electrical conductivity, high compacted density (compaction density), and high capacity. During research, the inventors have found that when K ≤ 1, the lithium iron phosphate positive electrode material can be ensured to have excellent properties such as high electrical conductivity, low resistivity, high compacted density, and high capacity. This lithium iron phosphate positive electrode material has a powder resistivity of less than 10 Ω·cm, a compacted density of greater than 2.2 g/cm³, a 0.1C discharge capacity of greater than 160 mAh/g, and a 1C discharge capacity of greater than 150 mAh/g, and has the advantage of high capacity.
2. The preparation method for a lithium iron phosphate positive electrode material provided by the present application can produce a lithium iron phosphate positive electrode material having good comprehensive properties such as low resistivity, high electrical conductivity, high compacted density, and high capacity. The lithium iron phosphate positive electrode material prepared by the present application has a powder resistivity of less than 10 Ω·cm, a compacted density of greater than 2.2 g/cm³, a 0.1C discharge capacity of greater than 160 mAh/g, and a 1C discharge capacity of greater than 150 mAh/g, and has the advantage of high capacity. By controlling the iron-to-phosphorus ratio and the specific surface area of iron phosphate, as well as the slurry particle size, the amount of doping elements, and the type of flux, the lithium iron phosphate positive electrode material with K ≤ 1 is obtained in the present application. The lithium iron phosphate positive electrode material with K ≤ 1 has comprehensive properties such as low resistivity, high electrical conductivity, high compacted density, and high capacity.
   Lithium iron phosphate possesses one-dimensional lithium-ion transport channels, and lithium ions are transported along the b-axis. The shorter the b-axis, the faster the lithium-ion transport, and the better the ionic conductivity; moreover, the smaller the grain size, the higher the capacity. During research, the inventors have found that the lithium iron phosphate positive electrode material with K ≤ 1 can be ensured to have excellent properties such as high electrical conductivity and low resistivity. Furthermore, the method of the present application enables the lithium iron phosphate positive electrode material to achieve K≤ 1, thereby improving its properties such as electrical conductivity and capacity.
3. In the preparation method for a lithium iron phosphate positive electrode material provided by the present application, during the preparation of the lithium iron phosphate positive electrode material, the electrical conductivity can be further optimized by adjusting the amount of the flux.

In the present application, by further optimizing the types of the carbon sources, the carbon content in lithium iron phosphate positive electrode material products can be ensured. By optimizing the parameters of the spray drying, the spherical size and moisture content of the dried material can be controlled. For example, if the feed frequency is too high, the material particles are large, and the moisture content is high; and if the atomizer frequency is too low, the particles are large, which is unfavorable for improving the compacted density and for the subsequent process. By optimizing the inlet air temperature and the outlet air temperature, the present application facilitates the removal of moisture without generating high energy consumption that would lead to carbon volatilization and affect the carbon content of the product. During the preparation of the lithium iron phosphate positive electrode material, the present application can further improve its electrical performance by controlling the sintering temperature.

### BRIEF DESCRIPTION OF THE DRAWING

In order to more clearly illustrate technical solutions in the specific embodiments of the present application or the prior art, the drawing which needs to be used in the description of the specific embodiments or the prior art will be briefly introduced below. Apparently, the drawing in the following description merely shows some embodiments of the present disclosure, and those ordinarily skilled in the art still could obtain other drawings in light of the drawing, without making inventive efforts.

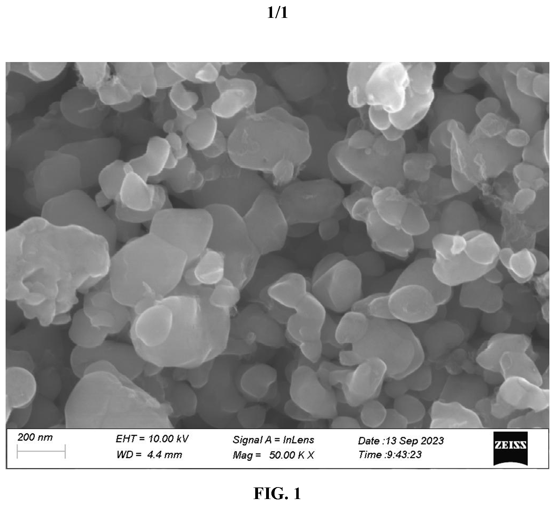

FIG. 1 is a scanning electron microscope image of a lithium iron phosphate positive electrode material according to Example 1 of the present application.

### DETAILED DESCRIPTION OF THE EMBODIMENTS

The following examples are provided to facilitate a better and further understanding of the present application, are not limited to the best embodiments, and are not intended to limit the content and scope of protection of the present application. Any product identical or similar to the present application, derived by any person under the inspiration of the present application or by combining the features of the present application with those of other prior art, shall fall within the scope of protection of the present application.

Where specific experimental steps or conditions are not indicated in the examples, they can be carried out according to conventional experimental steps or conditions described in the literature in the art. Where the manufacturers of the reagents or instruments used are not indicated, all of them are conventional reagent products that are commercially available.

In the specific embodiments, the molecular formula of iron phosphate may be expressed as FeₓPO₄, where the value of x ranges from 0.975 to 0.99, so as to ensure that the iron-to-phosphorus ratio of the iron phosphate is 0.975-0.99. In each example, the molecular weight of iron phosphate can be calculated as 55.85x + 31 + 16 × 4.

### Example 1

The present example provides a preparation method for a lithium iron phosphate positive electrode material, including the following steps:
(1) Using anhydrous iron phosphate having an iron-to-phosphorus ratio of 0.982 and a specific surface area of 8.1 m²/g as a raw material, and mixing the anhydrous iron phosphate with lithium carbonate, titanium dioxide, vanadium pentoxide, polyethylene glycol, sucrose, lithium phosphate, and water in a mass ratio of 100:24.1:0.42:0.36:8:2:0.8:206.64, stirring for 30 min, and then grinding to obtain a slurry having a particle size D50 of 356 nm.
(2) Subjecting the above slurry to spray drying at a feed frequency of 26 Hz, an atomizer frequency of 48 Hz, an inlet air temperature of 260 °C, and an outlet air temperature of 85 °C; then sintering the spray-dried dry material by heating to a temperature of 785 °C at a heating rate of 3 °C/min and then holding at that temperature for 10 h, and after jet milling, obtaining the lithium iron phosphate positive electrode material satisfying K ≤ 1, where the K value of the lithium iron phosphate positive electrode material is calculated by equation 1.

### Example 2

This example provides a preparation method for a lithium iron phosphate positive electrode material. The difference from Example 1 lies in changing the iron-to-phosphorus ratio of the anhydrous iron phosphate. In this example, the iron-to-phosphorus ratio of the anhydrous iron phosphate was 0.976, and the rest was the same as that of Example 1.

### Example 3

This example provides a preparation method for a lithium iron phosphate positive electrode material, which differs from Example 1 in that tungsten trioxide was used in place of vanadium pentoxide, and the mass ratio of iron phosphate, lithium carbonate, titanium dioxide, tungsten trioxide, polyethylene glycol, sucrose, lithium phosphate, and water was 100:24.1:0.42:0.26:8:2:0.8:206.64. The rest was the same as that of Example 1.

### Example 4

This example provides a preparation method for a lithium iron phosphate positive electrode material. The difference from Example 1 lies in changing the sintering temperature. In this example, the sintering temperature was 810 °C, and the rest was the same as that of Example 1.

### Example 5

This example provides a preparation method for a lithium iron phosphate positive electrode material, including the following steps:
(1) Using anhydrous iron phosphate having an iron-to-phosphorus ratio of 0.979 and a specific surface area of 6.5 m²/g as a raw material, and mixing the anhydrous iron phosphate with lithium hydroxide monohydrate, tungsten trioxide, magnesium oxide, carbon nanotubes, starch, lithium fluoride, and water in a mass ratio of 100:27.6:0.13:0.52:8:2:0.8:206.64, stirring for 25 min, and then grinding to obtain a slurry having a particle size D50 of 472 nm.
(2) Subjecting the above slurry to spray drying at a feed frequency of 15 Hz, an atomizer frequency of 55 Hz, an inlet air temperature of 260 °C, and an outlet air temperature of 85 °C; then sintering the spray-dried dry material by heating to a temperature of 755 °C at a heating rate of 2.5 °C/min and then holding at that temperature for 9 h, and after jet milling, obtaining the lithium iron phosphate positive electrode material satisfying K ≤ 1, where the K value of the lithium iron phosphate positive electrode material is calculated by equation 1.

### Comparative Example 1

This comparative example provides a preparation method for a lithium iron phosphate positive electrode material. The difference from Example 1 lies in changing the iron-to-phosphorus ratio of the anhydrous iron phosphate. In this comparative example, the iron-to-phosphorus ratio of the anhydrous iron phosphate was 0.965, and the rest was the same as that of Example 1.

### Comparative Example 2

This comparative example provides a preparation method for a lithium iron phosphate positive electrode material. The difference from Example 1 lies in changing the added amount of titanium dioxide to 0.82. The rest was the same as that of Example 1.

### Comparative Example 3

This comparative example provides a preparation method for a lithium iron phosphate positive electrode material, which differs from Example 1 in that no flux was added (i.e., no lithium phosphate was added). The rest was the same as that of Example 1.

### Test Example

This test example provides performance tests of the lithium iron phosphate positive electrode materials of various Examples and Comparative Examples, specifically as follows:
(1) The powder resistivity, compacted density, carbon content, and doping element content of the lithium iron phosphate positive electrode materials were obtained by the ICP testing method. The results are shown in Table 1.

The K values of the lithium iron phosphate positive electrode materials of each Example and Comparative Example were calculated by equation 1, and are shown in Table 1;
where $K = D + \left(b-6\right) \times 100$ equation 1
where D is the grain size of the lithium iron phosphate positive electrode material, with 0.05 ≤ D ≤ 0.15 µm; and
b is the b-axis length of the lithium iron phosphate positive electrode material, with b ≤ 6.0095 Å.

D and b are obtained by XRD testing; when obtaining the D value and the b value, it shall be ensured that the refinement R_{wp} ≤ 10%, where R_{wp} is the weighted profile residual factor, which can ensure the refinement accuracy.

(2) Preparation method for coin half-cells: The lithium iron phosphate positive electrode material (from each Example and Comparative Example), carbon black (SP), and polyvinylidene fluoride (PVDF) were mixed in a mass ratio of 90:5:5. N-methylpyrrolidone (NMP) was added. The mixture was uniformly mixed and then coated onto an aluminum foil, and dried at 100 °C for 4 h. The dried coated aluminum foil was cut into positive electrode sheets with a diameter of 12 mm. Coin half-cells were assembled using the positive electrode sheets, and allowed to stand for 12 h, and then the battery performance was tested. The results are shown in Table 1.

Battery capacity test method: A Neware test cabinet was used. The cells were charged at 0.1C to a cut-off voltage of 3.75 V, discharged at 0.1C to a cut-off voltage of 2 V, charged at 0.5C to a cut-off voltage of 3.75 V, and discharged at 1C to a cut-off voltage of 2 V.

**Table 1 Performance Results of Positive Electrode Materials of Examples and Comparative Examples**

| Example | D (µm) | b (Å) | K | Carbon content (%) | Doping element content (wt%) |
|---|---|---|---|---|---|
| Example 1 | 0.07 | 6.0028 | 0.35 | 1.44 | Ti (0.25%), V (0.20%) |
| Example 2 | 0.12 | 6.0062 | 0.74 | 1.35 | Ti (0.25%), V (0.20%) |
| Example 3 | 0.06 | 6.0052 | 0.58 | 1.42 | Ti (0.25%), W (0.20%) |
| Example 4 | 0.11 | 6.0081 | 0.92 | 1.39 | Ti (0.25%), V (0.20%) |
| Example 5 | 0.09 | 6.0071 | 0.80 | 1.37 | W (0.20%), Mg (0.30%) |
| Comparative Example 1 | 0.15 | 6.0105 | 1.20 | 1.41 | Ti (0.25%), V (0.20%) |
| Comparative Example 2 | 0.13 | 6.0098 | 1.11 | 1.47 | Ti (0.50%), V (0.20%) |
| Comparative Example 3 | 0.21 | 6.0112 | 1.33 | 1.32 | Ti (0.25%), V (0.20%) |

| Example | Powder resistivity (Ω·cm) | 0.1C discharge specific capacity (mAh/g) | 1C discharge specific capacity (mAh/g) | 2T Powder compacted density (g/cm³) | Specific surface area (m2/g) |
|---|---|---|---|---|---|
| Example 1 | 6.1 | 165.4 | 154.4 | 2.26 | 13.5 |
| Example 2 | 8.6 | 163.2 | 153.2 | 2.28 | 13.1 |
| Example 3 | 7.2 | 163.7 | 153.0 | 2.24 | 12.5 |
| Example 4 | 9.5 | 161.1 | 152.2 | 2.29 | 11.6 |
| Example 5 | 8.7 | 162.4 | 153.8 | 2.27 | 11.8 |
| Comparative Example 1 | 11.9 | 158.6 | 143.5 | 2.16 | 10.4 |
| Comparative Example 2 | 10.8 | 159.7 | 141.1 | 2.08 | 10.7 |
| Comparative Example 3 | 12.8 | 157.4 | 140.3 | 2.12 | 9.8 |

The above results show that the lithium iron phosphate positive electrode material with K ≤ 1 according to the present application has relatively good electrical conductivity and low resistivity. The positive electrode material of the present application has a specific surface area of 11-14 m²/g, a carbon content of 1.3-1.5 wt%, and a compacted density of greater than 2.2 g/cm³. Furthermore, this positive electrode material also has a relatively high discharge capacity.

Furthermore, in Comparative Example 1, when the iron-to-phosphorus ratio of iron phosphate was lower than 0.975, the lithium iron phosphate positive electrode material with K ≤ 1 could not be obtained; in Comparative Example 2, the mass content of doping elements in the obtained lithium iron phosphate positive electrode material was 7000 ppm, and the lithium iron phosphate positive electrode material with K ≤ 1 could not be obtained; in Comparative Example 3, when no flux was added, the lithium iron phosphate positive electrode material with K ≤ 1 could not be obtained. The above results demonstrate that by controlling the parameters such as the iron-to-phosphorus ratio of iron phosphate and the content of doping elements, the lithium iron phosphate positive electrode material with K ≤ 1 can be obtained in the present application, thereby ensuring the electrical conductivity and capacity of the positive electrode material, as well as a relatively good compacted density.

(3) FIG. 1 is a scanning electron microscope image at a magnification of 50,000× of the lithium iron phosphate positive electrode material prepared in Example 1 of the present application. It can be seen from the figure that the lithium iron phosphate positive electrode material has a relatively small particle size, which facilitates lithium-ion deintercalation and intercalation, resulting in good ionic conductivity. It can also be seen from the figure that a conductive carbon layer adheres to the particle surfaces, which can further improve the electronic conductivity. This further demonstrates that the lithium iron phosphate positive electrode material with K ≤ 1 provided by the present application has good electrical conductivity.

Obviously, the above examples are merely illustrative for the purpose of clear description and are not intended to limit the embodiments. For those ordinarily skilled in the art, other variations or modifications in different forms could also be made on the basis of the above description. It is unnecessary and impossible to enumerate all embodiments herein. Obvious variations or modifications derived therefrom shall still fall within the scope of protection of the present invention-creation.

## Claims

1. A lithium iron phosphate positive electrode material, **characterized in that** the lithium iron phosphate positive electrode material has K ≤ 1, and K satisfies equation 1: $K = D + \left(b-6\right) \times 100$ equation 1
wherein D is a grain size of the lithium iron phosphate positive electrode material, with 0.05 µm ≤ D ≤ 0.15 µm; and
b is a b-axis length of the lithium iron phosphate positive electrode material, with b ≤ 6.0095 Å.

2. A preparation method for a lithium iron phosphate positive electrode material, **characterized in that** the preparation method comprises following steps:
(1) mixing iron phosphate, a lithium source, a dopant, a carbon source, and a flux, followed by grinding, to obtain a slurry;
wherein the iron phosphate has an iron-to-phosphorus ratio of 0.975-0.99 and a specific surface area of 6-10 m²/g; the slurry has a particle size D50 of 300-500 nm; doping elements in the dopant comprise at least two of vanadium, titanium, tungsten, and magnesium; a mass content of the doping elements in the lithium iron phosphate positive electrode material is 1000-5000 ppm; and the flux is at least one selected from the group consisting of lithium fluoride, lithium phosphate, and lithium dihydrogen phosphate; and
(2) drying and sintering the slurry to obtain the lithium iron phosphate positive electrode material with K ≤ 1;
wherein $K = D + \left(b-6\right) \times 100$ equation 1.
wherein D is a grain size of the lithium iron phosphate positive electrode material, with 0.05 µm ≤ D ≤ 0.15 µm; and
b is a b-axis length of the lithium iron phosphate positive electrode material, with b ≤ 6.0095 Å.

3. The preparation method according to claim 2, **characterized in that** a molar ratio of the iron phosphate to lithium in the flux is 1:(0.02-0.06).

4. The preparation method according to claim 2 or 3, **characterized in that** the dopant comprises at least two selected from the group consisting of vanadium pentoxide, titanium dioxide, tungsten trioxide, and magnesium oxide.

5. The preparation method according to any one of claims 2 to 4, **characterized in that** a mass content of carbon element in the lithium iron phosphate positive electrode material is 1.3-1.5 wt%;
optionally, the carbon source is at least one selected from the group consisting of polyethylene glycol, glucose, carbon nanotubes, sucrose, and starch.

6. The preparation method according to any one of claims 2 to 5, **characterized by** satisfying at least one of (1)-(3):
(1) the lithium source is lithium carbonate and/or lithium hydroxide monohydrate;
(2) a molar ratio of the iron phosphate to lithium in the lithium source is 1:(0.97-1.02); and
(3) a mass content of water in the slurry is 50-70%.

7. The preparation method according to any one of claims 2 to 6, **characterized in that** the drying is spray drying;
optionally, parameters of the spray drying are: a feed frequency of 10-30 Hz and an atomizer frequency of 40-60 Hz;
optionally, an inlet air temperature is 240-270 °C; and
optionally, an outlet air temperature is 80-100 °C.

8. The preparation method according to any one of claims 2 to 7, **characterized in that** the sintering comprises the following specific steps: heating to a temperature of 750-820 °C at a heating rate of 1.5-4 °C/min, and then holding at the temperature for 8-12 h.

9. An electrode sheet, **characterized by** comprising a current collector and a coating layer attached to the current collector, wherein a raw material of the coating layer comprises the lithium iron phosphate positive electrode material according to claim 1 or the lithium iron phosphate positive electrode material prepared by the preparation method according to any one of claims 2 to 8.

10. A battery, **characterized by** comprising the lithium iron phosphate positive electrode material according to claim 1, the lithium iron phosphate positive electrode material prepared by the preparation method according to any one of claims 2 to 8, or the electrode sheet according to claim 9.
